# EUROPÄISCHE PATENTSCHRIFT

(11) **EP 3 389 291 B1**
(45) Veröffentlichungstag und Bekanntmachung des Hinweises auf die Patenterteilung: **07.09.2022**
(21) Anmeldenummer: 17166636.5
(22) Anmeldetag: 13.04.2017
(51) Int. Cl.: G07B 15/06

(54) **KOMMUNIKATION ZWISCHEN EINEM FAHRZEUG UND MEHREREN ROADSIDE UNITS**
COMMUNICATING BETWEEN A VEHICLE AND A PLURALITY OF ROAD-SIDE DEVICES
COMMUNICATION ENTRE UN VÉHICULE ET UNE PLURALITÉ DE DISPOSITIFS DE ROUTE

(43) Veröffentlichungstag der Anmeldung: 17.10.2018
(73) Patentinhaber: Deutsche Telekom AG, 53113 Bonn (DE)
(72) Erfinder: KLATT, Axel, 50999 Köln (DE)
(74) Vertreter: Schwöbel, Thilo K.

(56) Entgegenhaltungen:
- CN-C- 100 372 266
- JP-A- 2007 157 066
- JP-B2- 4 756 133
- KR-A- 20040 085 357
- KR-A- 20050 011 419
- US-A1- 2008 056 495
- "Intelligent Transport Systems (ITS); Vehicular Communications; Basic Set of Applications; Part 2: Specification of Cooperative Awareness Basic Service", IEEE DRAFT; ITS-0010019V135, IEEE-SA, PISCATAWAY, NJ USA , vol. 802.11 ETSI ITS, no. v135 21 July 2014 (2014-07-21), pages 1-45, XP068163402, Retrieved from the Internet: URL:http://www.ieee802.org/11/private/ETSI _documents/ITS/05-CONTRIBUTIONS/2014/ITS(1 4)000172_EN_302_637-2__CAM__for_national_v oting.zip ITS-0010019v135.doc [retrieved on 2014-07-21]

## Beschreibung

### Stand der Technik

Die Erfindung betrifft ein Verfahren zur Kommunikation zwischen einerseits einer Fahrzeugtelekommunikationseinrichtung oder einem Fahrzeug und andererseits einer Mehrzahl von straßenseitigen Einrichtungen durch Übertragung von Fahrzeugkommunikationsnachrichten zwischen der Fahrzeugtelekommunikationseinrichtung oder dem Fahrzeug und den straßenseitigen Einrichtungen, wobei die Mehrzahl von straßenseitigen Einrichtungen wenigstens eine erste straßenseitige Einrichtung und eine zweite straßenseitige Einrichtung aufweist

Die Erfindung betrifft des Weiteren ein System zur Kommunikation zwischen einerseits einer Fahrzeugtelekommunikationseinrichtung oder einem Fahrzeug und andererseits einer Mehrzahl von straßenseitigen Einrichtungen durch Übertragung von Fahrzeugkommunikationsnachrichten zwischen der Fahrzeugtelekommunikationseinrichtung oder dem Fahrzeug und den straßenseitigen Einrichtungen, wobei die Mehrzahl von straßenseitigen Einrichtungen wenigstens eine erste straßenseitige Einrichtung und eine zweite straßenseitige Einrichtung aufweist und wobei das System wenigstens das Fahrzeug und die Mehrzahl von straßenseitigen Einrichtungen aufweist.

Die Erfindung betrifft ferner eine straßenseitige Einrichtung zur Kommunikation zwischen einerseits einer Fahrzeugtelekommunikationseinrichtung oder einem Fahrzeug und andererseits einer Mehrzahl von straßenseitigen Einrichtungen durch Übertragung von Fahrzeugkommunikationsnachrichten zwischen der Fahrzeugtelekommunikationseinrichtung oder dem Fahrzeug und den straßenseitigen Einrichtungen, wobei die straßenseitige Einrichtung geeignet ist, in dem erfindungsgemäßen System oder gemäß des erfindungsgemäßen Verfahrens verwendet zu werden.

Ferner betrifft die Erfindung eine Fahrzeugtelekommunikationseinrichtung für ein Fahrzeug zur Kommunikation zwischen der Fahrzeugtelekommunikationseinrichtung und einer Mehrzahl von straßenseitigen Einrichtungen durch Übertragung von Fahrzeugkommunikationsnachrichten zwischen der Fahrzeugtelekommunikationseinrichtung und den straßenseitigen Einrichtungen, wobei das Fahrzeug und/oder die Fahrzeugkommunikationseinrichtung des Fahrzeugs geeignet ist, in dem erfindungsgemäßen System oder gemäß des erfindungsgemäßen Verfahrens verwendet zu werden.

Des Weiteren betrifft die Erfindung ein Computerprogramm mit Programmcodemitteln, mit deren Hilfe die Schritte das erfindungsgemäße Verfahren durchführbar sind, wenn das Computerprogramm auf einer programmierbaren Einrichtung, insbesondere als Teil des Systems, oder auf dem Fahrzeug oder der Fahrzeugkommunikationseinrichtung oder der oder den straßenseitigen Einrichtungen ausgeführt wird.

Die Erfindung betrifft auch ein Computerprogrammprodukt mit einem computerlesbaren Medium und einem auf dem computerlesbaren Medium gespeicherten Computerprogramm mit Programmcodemitteln zur Kommunikation zwischen einer Fahrzeugtelekommunikationseinrichtung und einer Mehrzahl von straßenseitigen Einrichtungen durch Übertragung von Fahrzeugkommunikationsnachrichten zwischen der Fahrzeugtelekommunikationseinrichtung und den straßenseitigen Einrichtungen, die dazu geeignet sind, dass die Schritte des erfindungsgemäßen Verfahrens durchführbar sind, wenn das Computerprogramm auf einer programmierbaren Einrichtung, insbesondere als Teil des Systems, oder auf dem Fahrzeug oder der Fahrzeugkommunikationseinrichtung oder der oder den straßenseitigen Einrichtungen ausgeführt wird.

Durch Verwendung von Vehicle-to-Vehicle Kommunikationsmechanismen ergeben sich neuartige Möglichkeiten für den Austausch von Daten zwischen verschiedenen Fahrzeugen und zwischen Fahrzeugen und anderen Entitäten, wodurch diverse Vorteile realisierbar sind, wie etwa eine Verminderung der Anzahl von Gefahrensituationen, eine verringerte Neigung zur Staubildung, eine Verbesserung der Möglichkeit zur Durchführung von Verkehrszählungen und/oder zur Erfassung der Benutzung bzw. der Art der Benutzung von Verkehrswegen. Aus der KR 2004 0085357 A ist in diesem Zusammenhang eine Anordnung von Road Side Units bekannt, die entlang einer Fahrstrecke angeordnet sind und dazu verwendet werden, die Geschwindigkeit von Fahrzeugen in den einzelnen Abschnitten der Strecke zu ermitteln. Aus der JP 4756133 B2 ist weiterhin ein System bekannt, bei dem ein Fahrzeug mit einer On-Board-Unit beim Passieren von Signalbrücken die jeweiligen Nummern der Signalbrücken registriert und die Route des Fahrzeugs anhand der registrierten Nummern bestimmt wird.

### Offenbarung der Erfindung

Der Erfindung liegt die Aufgabe zugrunde, ein optimiertes Verfahren zum Austausch von Daten zwischen einer Fahrzeugtelekommunikationseinrichtung für ein Fahrzeug und einer Mehrzahl von straßenseitigen Einrichtungen zur Verfügung zu stellen.

Die Aufgabe wird erfindungsgemäß gelöst durch ein Verfahren gemäß Anspruch 1.

Es ist dadurch gemäß der vorliegenden Erfindung in vorteilhafter Weise möglich, ein Kommunikationsverfahren zwischen einem oder mehreren Fahrzeugen (bzw. Fahrzeugtelekommunikationseinrichtung(en)) und insbesondere einer Mehrzahl von straßenseitigen Einrichtungen durch die Übertragung von Fahrzeugkommunikationsnachrichten bereitzustellen. Erfindungsgemäß wird dabei in einem ersten Schritt eine erste Fahrzeugkommunikationsnachricht von der ersten straßenseitigen Einrichtung zu der Fahrzeugtelekommunikationseinrichtung oder zu dem Fahrzeug übertragen, wobei die erste Fahrzeugkommunikationsnachricht eine erste Tokeninformation umfasst. Dadurch ist es erfindungsgemäß in vorteilhafter Weise möglich, dass eine Tokeninformation (beispielswiese eine Tokeninformation, die eine Identifikationsinformation bezüglich der ersten straßenseitigen Einrichtung aufweist und/oder die eine Anforderung zur Generierung einer zweiten Tokeninformation aufweist) von der ersten straßenseitigen Einrichtung zu der Fahrzeugtelekommunikationseinrichtung oder zu dem Fahrzeug übertragen wird. Diese Übertragung der ersten Fahrzeugkommunikationsnachricht kann beispielsweise in vorteilhafter Weise stattfinden, wenn sich das Fahrzeug (bzw. die Fahrzeugtelekommunikationseinrichtung) innerhalb eines Umkreises um die erste straßenseitige Einrichtung befindet, insbesondere innerhalb eines festgelegten Umkreises um die erste straßenseitige Einrichtung. Erfindungsgemäß wird dann in einem dem ersten Schritt nachfolgenden zweiten Schritt eine zweite Fahrzeugkommunikationsnachricht von der Fahrzeugtelekommunikationseinrichtung oder dem Fahrzeug zu einer zweiten straßenseitigen Einrichtung übertragen, wobei die zweite Fahrzeugkommunikationsnachricht entweder die erste Tokeninformation umfasst oder wobei die zweite Fahrzeugkommunikationsnachricht eine durch die Fahrzeugtelekommunikationseinrichtung oder in dem Fahrzeug aufgrund der zuvor empfangenen ersten Tokeninformation generierte oder modifizierte zweite Tokeninformation umfasst. Dadurch ist es in vorteilhafter Weise möglich, dass die zweite Tokeninformation in Abhängigkeit der ersten Tokeninformation generiert wird, also beispielsweise eine in der ersten Tokeninformation enthaltene Information (beispielsweise eine Information bezüglich der Identität der ersten straßenseitigen Einrichtung) ebenso aufweist (und insbesondere dazu noch weitere, zusätzliche Informationen beispielswiese eine Tokeninformation, die eine Identifikationsinformation bezüglich der zweiten straßenseitigen Einrichtung aufweist und/oder die eine Information bezüglich des Zeitpunkts der Übermittlung der ersten Fahrzeugkommunikationsnachricht aufweist). Es ist allerdings auch möglich, dass die zweite Tokeninformation lediglich durch eine in der ersten Tokeninformation enthaltene Anforderung generiert wird und ansonsten keine Informationen der ersten Tokeninformation enthält. Die Übertragung der zweiten Fahrzeugkommunikationsnachricht kann beispielsweise in vorteilhafter Weise stattfinden, wenn sich das Fahrzeug (bzw. die Fahrzeugtelekommunikationseinrichtung) innerhalb eines Umkreises um die zweite straßenseitige Einrichtung befindet, insbesondere innerhalb eines vorher festgelegten Umkreises um die zweite straßenseitige Einrichtung. Dabei hat sich das Fahrzeug nach dem Empfang der ersten Fahrzeugkommunikationsnachricht und vor dem Versenden der zweiten Fahrzeugkommunikationsnachricht entlang einer Strecke/Straße/Route zwischen der ersten straßenseitigen Einrichtung und der zweiten straßenseitigen Einrichtung, insbesondere in Richtung der zweiten straßenseitigen Einrichtung, bewegt. Durch das erfindungsgemäße Verfahren ist es beispielsweise möglich, dass eine Tokeninformation durch das Fahrzeug (bzw. die Fahrzeugtelekommunikationseinrichtung) von einer ersten straßenseitigen Einrichtung zu einer zweiten straßenseitigen Einrichtung weitergegeben werden (und dabei möglicherweise durch weitere Informationen erweitert wird). So ist es beispielsweise möglich, dass die zweite straßenseitigen Einrichtung Informationen zum Zeitpunkt und Ort des Fahrzeugs bzw. der Fahrzeugtelekommunikationseinrichtung während der Übermittlung der ersten Fahrzeugkommunikationsnachricht erhält und zusätzlich Informationen zum Zeitpunkt und Ort (des Fahrzeugs bzw. der Fahrzeugtelekommunikationseinrichtung) während der Übermittlung der zweiten Fahrzeugkommunikationsnachricht generiert/erhält/speichert, sodass beispielsweise die mittlere Geschwindigkeit des Fahrzeugs zwischen der ersten straßenseitigen Einrichtung und der zweiten straßenseitigen Einrichtung ermittelt werden kann, insbesondere durch einen Betreiber der straßenseitigen Einrichtungen oder eine Entität, die Zugriff auf die Tokeninformationen bzw. Daten der straßenseitigen Einrichtungen hat, (und beispielsweise dadurch Informationen zu möglichen Geschwindigkeitsüberschreitungen des Fahrzeugs erhalten werden können) . Ebenso ist es möglich, dass einige oder alle straßenseitigen Einrichtungen über die Möglichkeit zum Schreiben und Auslesen der Tokeninformationen und über die Möglichkeit zur Weiterleitung der erfassten (ausgelesenen) Daten (aus den Tokeninformationen) an eine zentrale Erfassungs- und/oder Auswerteeinheit verfügen. Durch das erfindungsgemäße Verfahren ist es beispielsweise möglich die Möglichkeiten zur Erhebung einer Maut zu verbessern/individualisieren, die Messung von Verkehrsaufkommen zu verbessern, die Möglichkeiten zur Erfassung von Verkehrsvergehen zu verbessern.

Gemäß der vorliegenden Erfindung ist es vorgesehen, dass die Mehrzahl von straßenseitigen Einrichtungen neben der wenigstens einen ersten und zweiten straßenseitigen Einrichtung eine dritte straßenseitige Einrichtung aufweist, wobei die Nachrichtenübertragung des ersten und vierten Schritts zwischen der ersten straßenseitigen Einrichtung und einer Fahrzeugtelekommunikationseinrichtung (20) eines zweiten Fahrzeugs (21) durchgeführt wird und die Nachrichtenübertragung des zweiten Schritts zwischen der dritten straßenseitigen Einrichtung und der Fahrzeugtelekommunikationseinrichtung (20) des zweiten Fahrzeugs (21) durchgeführt wird.

Dadurch ist es gemäß einer Ausführungsform der Erfindung vorgesehen, dass die Mehrzahl von straßenseitigen Einrichtungen neben der wenigstens einen ersten und zweiten straßenseitigen Einrichtung eine dritte straßenseitige Einrichtung aufweist. Das erfindungsgemäße Verfahren wird dabei dazu verwendet, bei Straßenverläufen mit Kreuzungen und Straßengabelungen bei denen die zweite straßenseitige Einrichtung an einer ersten Straße/Strecke/Route nach der Straßengabelung liegt und die dritte straßenseitige Einrichtung an einer zweiten Straße/Strecke/Route nach der Straßengabelung liegt und die erste straßenseitige Einrichtung an der Straße/Strecke/route vor der Straßengabelung liegt, weitere Details zu Verkehrsflüssen zu erhalten und die Anzahl (und Art) der Fahrzeuge, die die erste oder zweite Straße/Strecke/ Route verwenden festzustellen.

Gemäß einer Ausführungsform der vorliegenden Erfindung ist es vorgesehen, dass im zweiten Schritt als Teil der zweiten Fahrzeugkommunikationsnachricht
-- zusätzlich zu der ersten Tokeninformation oder
-- zusätzlich zu oder als Teil der zweiten Tokeninformation
wenigstens eine weitere Information von der Fahrzeugtelekommunikationseinrichtung oder dem Fahrzeug zu der zweiten straßenseitigen Einrichtung oder zu der dritten straßenseitigen Einrichtung übertragen wird, wobei die weitere Information wenigstens eine der nachfolgenden Informationen umfasst:
-- eine sich auf das Fahrzeug beziehende geographische Koordinateninformation,
-- eine sich auf das Fahrzeug und eine Zeitinformation beziehende geographische Koordinateninformation,
-- eine sich auf das Fahrzeug beziehende geographische Koordinateninformation und ferner eine sich auf die geographische Koordinateninformation beziehende Zeitinformation,
-- eine sich auf das Fahrzeug und den Empfangs- oder Verarbeitungszeitpunkt der ersten Fahrzeugkommunikationsnachricht beziehende geographische Koordinateninformation und insbesondere ferner eine Zeitinformation des Empfangs-oder Verarbeitungszeitpunkts der ersten Fahrzeugkommunikationsnachricht,
-- eine sich auf das Fahrzeug und den Verarbeitungs- oder Sendezeitpunkt der zweiten Fahrzeugkommunikationsnachricht beziehende geographische Koordinateninformation und insbesondere ferner eine Zeitinformation des Verarbeitungs- oder Sendezeitpunkts der zweiten Fahrzeugkommunikationsnachricht,
wobei insbesondere der erste und/oder der zweite Schritt in Abhängigkeit einer von der Fahrzeugtelekommunikationseinrichtung oder dem Fahrzeug übertragenen Bewegungsrichtungsinformation und/oder in Abhängigkeit einer von der Fahrzeugtelekommunikationseinrichtung oder dem Fahrzeug übertragenen oder von der ersten straßenseitigen Einrichtung detektierten Geschwindigkeitsinformation erfolgt oder durchgeführt wird.

Dadurch ist es gemäß verschiedener Ausführungsformen der Erfindung (bzw. Varianten der Erfindung) möglich, dass im zweiten Schritt als Teil der zweiten Fahrzeugkommunikationsnachricht
-- zusätzlich zu der ersten Tokeninformation oder
-- zusätzlich zu oder als Teil der zweiten Tokeninformation
wenigstens eine weitere Information von der Fahrzeugtelekommunikationseinrichtung oder dem Fahrzeug zu der zweiten straßenseitigen Einrichtung oder zu der dritten straßenseitigen Einrichtung übertragen wird.

Im Zusammenhang mit solchen erfindungsgemäßen Ausführungsvarianten ist es insbesondere vorgesehen, dass die weitere Information eine sich auf das Fahrzeug beziehende geographische Koordinateninformation und/oder eine sich auf das Fahrzeug und eine Zeitinformation beziehende geographische Koordinateninformation und/oder eine sich auf das Fahrzeug beziehende geographische Koordinateninformation und ferner eine sich auf die geographische Koordinateninformation beziehende Zeitinformation und/oder eine sich auf das Fahrzeug und den Empfangs- oder Verarbeitungszeitpunkt der ersten Fahrzeugkommunikationsnachricht beziehende geographische Koordinateninformation und insbesondere ferner eine Zeitinformation des Empfangs- oder Verarbeitungszeitpunkts der ersten Fahrzeugkommunikationsnachricht umfasst. Alternativ oder kumulativ ist es gemäß einer weiteren Variante erfindungsgemäß vorgesehen, dass die weitere Information eine sich auf das Fahrzeug und den Verarbeitungs- oder Sendezeitpunkt der zweiten Fahrzeugkommunikationsnachricht beziehende geographische Koordinateninformation und insbesondere ferner eine Zeitinformation des Verarbeitungs- oder Sendezeitpunkts der zweiten Fahrzeugkommunikationsnachricht umfasst.

Dabei ist es möglich, dass die sich auf das Fahrzeug beziehende geographische Koordinateninformation insbesondere eine geographische Koordinateninformation ist, die den Ort des Fahrzeugs angibt, insbesondere zu einem bestimmten Zeitpunkt, wie z.B. dem Empfangs- oder Verarbeitungszeitpunkt der ersten Fahrzeugkommunikationsnachricht und/oder dem Verarbeitungs- oder Sendezeitpunkt der zweiten Fahrzeugkommunikationsnachricht. Dabei ist es ferner möglich, dass eine geographische Koordinateninformation beispielsweise durch eine Global Positioning System (GPS)-fähiges Element, das dem Fahrzeug zugeordnet (oder an dem Fahrzeug angeordnet) ist, bereitgestellt wird (bzw. dass die Fahrzeugtelekommunikationseinrichtung aus einem solchen Global Positioning System (GPS)-fähigen Element eine geographische Koordinateninformation auslesen kann). Es ist ebenso möglich, dass die Fahrzeugtelekommunikationseinrichtung selbst GPS-fähig ist. Es ist dabei insbesondere des Weiteren möglich, dass eine Information, anhand derer eine Identifikation des Fahrzeugs möglich ist (beispielsweise eine Information zum Kraftfahrzeug-Kennzeichen oder eine Identifikationsinformation, anhand derer ein Fahrzeug oder eine Fahrzeugtelekommunikationseinrichtung identifiziert werden kann) in der weiteren Information enthalten ist.

Dadurch ist es des Weiteren möglich, dass aufgrund der in der weiteren Information enthaltenen Zeitinformation(en) und geographischen Koordinateninformation(en) eine Geschwindigkeitsinformation (z.B. die mittlere Geschwindigkeit des Fahrzeugs, insbesondere für (oder bezogen auf) die zurückgelegte Strecke zwischen (dem Empfang) der ersten Fahrzeugkommunikationsnachricht und (dem Senden) der zweiten Fahrzeugkommunikationsnachricht), ermittelt werden kann, insbesondere durch die zweite straßenseitigen Einrichtung oder einen Betreiber der straßenseitigen Einrichtungen oder eine Entität, die auf die weitere Information nach Übermittlung an die zweite straßenseitige Einrichtung zugreifen kann, oder aber durch die Fahrzeugtelekommunikationseinrichtung selbst.

Hierdurch kann insbesondere der erste und/oder der zweite Schritt in Abhängigkeit einer von der Fahrzeugtelekommunikationseinrichtung oder dem Fahrzeug (insbesondere als Teil der weiteren Information) übertragenen Bewegungsrichtungsinformation und/oder in Abhängigkeit einer von der Fahrzeugtelekommunikationseinrichtung oder dem Fahrzeug übertragenen oder von der ersten straßenseitigen Einrichtung detektierten/ermittelten Geschwindigkeitsinformation erfolgen oder durchgeführt werden.

Gemäß einer Ausführungsform der vorliegenden Erfindung ist es vorgesehen, dass die erste Tokeninformation, die als Teil der im ersten Schritt von der ersten straßenseitigen Einrichtung zu der Fahrzeugtelekommunikationseinrichtung oder dem Fahrzeug übertragenen ersten Fahrzeugkommunikationsnachricht übertragen wird, lediglich eine Anforderung zur Generierung der zweiten Tokeninformation aufweist oder ist.

Gemäß einer Ausführungsform der vorliegenden Erfindung ist es vorgesehen, dass in einem dem ersten Schritt nachfolgenden und dem zweiten Schritt vorangehenden dritten Schritt eine dritte Fahrzeugkommunikationsnachricht von der Fahrzeugtelekommunikationseinrichtung oder dem Fahrzeug zu der ersten straßenseitigen Einrichtung oder zu der zweiten straßenseitigen Einrichtung oder zu der dritten straßenseitigen Einrichtung übertragen wird, wobei mittels der dritten Fahrzeugkommunikationsnachricht der Empfang der ersten Tokeninformation bestätigt wird.

Hierdurch ist es gemäß einer Ausführungsform der Erfindung in vorteilhafter Weise möglich, dass die erste und/oder zweite und/oder dritte straßenseitige Einrichtung von der Fahrzeugtelekommunikationseinrichtung oder dem Fahrzeug mittels einer dritten Fahrzeugkommunikationsnachricht darüber informiert wird, dass die erste Tokeninformation von der Fahrzeugtelekommunikationseinrichtung oder dem Fahrzeug empfangen wurde. Dadurch kann sichergestellt werden, dass eine Übermittlung der ersten Tokeninformation tatsächlich stattgefunden hat, was beispielsweise hilfreich für das Zählen von Fahrzeugen entlang eines bestimmten Weges oder Gebührenberechnung bei Mautsystemen sein kann.

Gemäß der vorliegenden Erfindung ist es vorgesehen, dass in einem dem ersten Schritt vorangehenden vierten Schritt eine vierte Fahrzeugkommunikationsnachricht von der Fahrzeugtelekommunikationseinrichtung oder dem Fahrzeug zu der ersten straßenseitigen Einrichtung übertragen wird, wobei mittels der vierten Fahrzeugkommunikationsnachricht eine bezüglich der Fahrzeugklasse des Fahrzeugs eindeutige Identifikationsinformation zu der ersten straßenseitige Einrichtung übertragen wird.

Auf diese Weise wird der ersten straßenseitigen Einrichtung, noch vor der Übermittlung der ersten Tokeninformation an die Fahrzeugtelekommunikationseinrichtung oder das Fahrzeug und vor der Erstellung der ersten Tokeninformation, eine bezüglich der Fahrzeugklasse des Fahrzeugs eindeutige Identifikationsinformation übertragen wird und die erste Tokeninformation in Abhängigkeit von der eindeutigen Identifikationsinformation generiert wird. Dies ist beispielsweise besonders nützlich für Mautsysteme, bei denen unterschiedlichen Fahrzeugmodellen unterschiedliche Gebühren zugeordnet sind. Dies ist ebenso vorteilhaft für eine präzisere Erfassung der Fahrzeugtypen, die eine bestimmte Strecke benutzen, woraus vorteilhafte Schlüsse für die künftige Verkehrslenkung oder mögliche Stauvorkommen o.ä. gezogen werden können. Des Weiteren kann eine bezüglich der Fahrzeugtelekommunikationseinrichtung oder des Fahrzeugs eindeutige Identifikationsinformation zu der ersten straßenseitige Einrichtung übertragen und individuelle erste Tokeninformationen (durch die erste straßenseitige Einrichtung) übermittelt/generiert werden, die eine genaue Identifikation des Fahrzeugs bzw. der Fahrzeugtelekommunikationseinrichtung ermöglichen. Dadurch kann gemäß einer Ausführungsform der vorliegenden Erfindung beispielsweise eine ermittelte geographische Koordinateninformation oder eine ermittelte Geschwindigkeit einem speziellen Fahrzeug oder einer speziellen Fahrzeugtelekommunikationseinrichtung zugeordnet werden, was beispielsweise bei der Ermittlung/Zuordnung von Geschwindigkeitsüberschreitungen hilfreich sein kann. Hierdurch ist es des Weiteren beispielsweise möglich zu erfassen, zu welcher Tageszeit die Benutzung einer bestimmten Straße/Strecke/Route, an der (oder in deren Nähe) die erste und zweite straßenseitige Einrichtung angebracht sind, durch ein Fahrzeug bzw. Fahrzeugtelekommunikationseinrichtung (das/die durch die Identifikationsinformation identifiziert werden kann) stattfindet. Solche Informationen können beispielsweise zur Erfassung tageszeitabhängiger Mautgebühren (für die Benutzung dieser bestimmten Strecke oder Route) für das Fahrzeug verwendet werden. Des Weiteren können gemäß einer Ausführungsform der vorliegenden Erfindung beispielsweise individuelle Versicherungsgebühren für ein Fahrzeug/ einen Fahrzeughalter ermittelt werden, wobei die Versicherungsgebühren abhängig sein können von der Benutzung bestimmter Routen/Strecken/Straßen, bzw. von der Benutzung bestimmter Routen/Strecken/Straßen zu bestimmten Tageszeiten.

Gemäß einer Ausführungsform der vorliegenden Erfindung ist es vorgesehen, dass in einem dem ersten Schritt nachfolgenden und dem zweiten Schritt vorangehenden fünften Schritt eine fünfte Fahrzeugkommunikationsnachricht von der zweiten straßenseitigen Einrichtung oder von der dritten straßenseitigen Einrichtung zu der Fahrzeugtelekommunikationseinrichtung oder dem Fahrzeug übertragen wird, wobei mittels der fünften Fahrzeugkommunikationsnachricht die Übertragung der zweiten Fahrzeugkommunikationsnachricht von der Fahrzeugtelekommunikationseinrichtung oder dem Fahrzeug zu der zweiten straßenseitigen oder zu der dritten straßenseitigen Einrichtung veranlasst oder angefordert wird.

Hierdurch ist es erfindungsgemäß möglich, dass das Fahrzeug bzw. die Fahrzeugtelekommunikationseinrichtung eine Information (beispielsweise eine Triggerinformation) als Teil der fünften Fahrzeugkommunikationsnachricht von der zweiten oder dritten straßenseitigen Einrichtung erhält, sodass das Fahrzeug bzw. die Fahrzeugtelekommunikationseinrichtung veranlasst wird, mit der Erstellung/Übertragung der zweiten Fahrzeugkommunikationsnachricht zu beginnen.

Gemäß einer Ausführungsform der vorliegenden Erfindung ist es vorgesehen, dass die zweite Tokeninformation und/oder die wenigstens eine weitere Information dazu verwendet wird/werden die durchschnittliche Geschwindigkeit des Fahrzeugs zwischen der sich auf das Fahrzeug und den Empfangs- oder Verarbeitungszeitpunkt der ersten Fahrzeugkommunikationsnachricht beziehenden geographischen Koordinateninformation und der sich auf das Fahrzeug und den Verarbeitungs- oder Sendezeitpunkt der zweiten Fahrzeugkommunikationsnachricht beziehenden geographischen Koordinateninformation und/oder
dass die Fahrzeugkommunikationsnachrichten als Kollisionsvermeidungsnachrichteninsbesondere gemäß der PC5-Schnittstellendefinition - innerhalb eines Kommunikationssystems gemäß des LTE-V-Standards (Long Term Evolution Vehicle Communication) und/oder einer vergleichbaren Nachricht des IEEE 802.11p-Standards vorgesehen sind.

Des Weiteren wird die Aufgabe gelöst durch ein System gemäß Anspruch 7.

Es ist dadurch gemäß der vorliegenden Erfindung in vorteilhafter Weise möglich, ein System zur Kommunikation zwischen einem oder mehreren Fahrzeugen (bzw. Fahrzeugtelekommunikationseinrichtung(en)) und insbesondere einer Mehrzahl von straßenseitigen Einrichtungen durch die Übertragung von Fahrzeugkommunikationsnachrichten bereitzustellen. Erfindungsgemäß wird dabei in einem ersten Schritt eine erste Fahrzeugkommunikationsnachricht von der ersten straßenseitigen Einrichtung zu der Fahrzeugtelekommunikationseinrichtung des ersten Fahrzeugs übertragen, wobei die erste Fahrzeugkommunikationsnachricht eine erste Tokeninformation umfasst. Dadurch ist es erfindungsgemäß in vorteilhafter Weise möglich, dass eine Tokeninformation (beispielswiese eine Tokeninformation, die eine Identifikationsinformation bezüglich der ersten straßenseitigen Einrichtung aufweist und/oder die eine Anforderung zur Generierung einer zweiten Tokeninformation aufweist) von der ersten straßenseitigen Einrichtung zu der Fahrzeugtelekommunikationseinrichtung übertragen wird. Diese Übertragung der ersten Fahrzeugkommunikationsnachricht kann beispielsweise in vorteilhafter Weise stattfinden, wenn sich das Fahrzeug (bzw. die Fahrzeugtelekommunikationseinrichtung) innerhalb eines Umkreises um die erste straßenseitige Einrichtung befindet, insbesondere innerhalb eines festgelegten Umkreises um die erste straßenseitige Einrichtung. Erfindungsgemäß wird dann in einem dem ersten Schritt nachfolgenden zweiten Schritt eine zweite Fahrzeugkommunikationsnachricht von der Fahrzeugtelekommunikationseinrichtung oder dem Fahrzeug zu einer zweiten straßenseitigen Einrichtung übertragen, wobei die zweite Fahrzeugkommunikationsnachricht entweder die erste Tokeninformation umfasst oder wobei die zweite Fahrzeugkommunikationsnachricht eine durch die Fahrzeugtelekommunikationseinrichtung oder in dem Fahrzeug aufgrund der zuvor empfangenen ersten Tokeninformation generierte oder modifizierte zweite Tokeninformation umfasst. Dadurch ist es in vorteilhafter Weise möglich, dass die zweite Tokeninformation in Abhängigkeit der ersten Tokeninformation generiert wird, also beispielsweise eine in der ersten Tokeninformation enthaltene Information (beispielsweise eine Information bezüglich der Identität der ersten straßenseitigen Einrichtung) ebenso aufweist (und insbesondere dazu noch weitere, zusätzliche Informationen beispielswiese eine Tokeninformation, die eine Identifikationsinformation bezüglich der zweiten straßenseitigen Einrichtung aufweist und/oder die eine Information bezüglich des Zeitpunkts der Übermittlung der ersten Fahrzeugkommunikationsnachricht aufweist). Es ist allerdings auch möglich, dass die zweite Tokeninformation lediglich durch eine in der ersten Tokeninformation enthaltene Anforderung generiert wird und ansonsten keine Informationen der ersten Tokeninformation enthält. Die Übertragung der zweiten Fahrzeugkommunikationsnachricht kann beispielsweise in vorteilhafter Weise stattfinden, wenn sich das Fahrzeug (bzw. die Fahrzeugtelekommunikationseinrichtung) innerhalb eines Umkreises um die zweite straßenseitige Einrichtung befindet, insbesondere innerhalb eines vorher festgelegten Umkreises um die zweite straßenseitige Einrichtung. Dabei hat sich das Fahrzeug nach dem Empfang der ersten Fahrzeugkommunikationsnachricht und vor dem Versenden der zweiten Fahrzeugkommunikationsnachricht entlang einer Strecke/Straße/Route zwischen der ersten straßenseitigen Einrichtung und der zweiten straßenseitigen Einrichtung, insbesondere in Richtung der zweiten straßenseitigen Einrichtung, bewegt. Durch das erfindungsgemäße System ist es beispielsweise möglich, dass eine Tokeninformation durch das Fahrzeug (bzw. die Fahrzeugtelekommunikationseinrichtung) von einer ersten straßenseitigen Einrichtung zu einer zweiten straßenseitigen Einrichtung weitergegeben werden (und dabei möglicherweise durch weitere Informationen erweitert wird). So ist es beispielsweise möglich, dass die zweite straßenseitigen Einrichtung Informationen zum Zeitpunkt und Ort des Fahrzeugs bzw. der Fahrzeugtelekommunikationseinrichtung während der Übermittlung der ersten Fahrzeugkommunikationsnachricht erhält und zusätzlich Informationen zum Zeitpunkt und Ort (des Fahrzeugs bzw. der Fahrzeugtelekommunikationseinrichtung) während der Übermittlung der zweiten Fahrzeugkommunikationsnachricht generiert/erhält/speichert, sodass beispielsweise die mittlere Geschwindigkeit des Fahrzeugs zwischen der ersten straßenseitigen Einrichtung und der zweiten straßenseitigen Einrichtung ermittelt werden kann, insbesondere durch einen Betreiber der straßenseitigen Einrichtungen oder eine Entität, die Zugriff auf die Tokeninformationen bzw. Daten der straßenseitigen Einrichtungen hat, (und beispielsweise dadurch Informationen zu möglichen Geschwindigkeitsüberschreitungen des Fahrzeugs erhalten werden können) . Ebenso ist es möglich, dass einige oder alle straßenseitigen Einrichtungen über die Möglichkeit zum Schreiben und Auslesen der Tokeninformationen und über die Möglichkeit zur Weiterleitung der erfassten (ausgelesenen) Daten (aus den Tokeninformationen) an eine zentrale Erfassungs- und/oder Auswerteeinheit verfügen. Durch das erfindungsgemäße System ist es beispielsweise möglich die Möglichkeiten zur Erhebung einer Maut zu verbessern/individualisieren, die Messung von Verkehrsaufkommen zu verbessern, die Möglichkeiten zur Erfassung von Verkehrsvergehen zu verbessern.

Gemäß der vorliegenden Erfindung ist es vorgesehen, dass die Mehrzahl von straßenseitigen Einrichtungen neben der wenigstens einen ersten und zweiten straßenseitigen Einrichtung eine dritte straßenseitige Einrichtung aufweist, wobei die Nachrichtenübertragung des ersten und vierten Schritts zwischen der ersten straßenseitigen Einrichtung und einer Fahrzeugtelekommunikationseinrichtung (20) eines zweiten Fahrzeugs (21) durchgeführt wird und die Nachrichtenübertragung des zweiten Schritts zwischen der dritten straßenseitigen Einrichtung und der Fahrzeugtelekommunikationseinrichtung (20) des zweiten Fahrzeugs (21) durchgeführt wird.

Die Aufgabe wird ferner gelöst durch eine straßenseitige Einrichtung zur Kommunikation zwischen einerseits einer Fahrzeugtelekommunikationseinrichtung oder einem Fahrzeug und andererseits einer Mehrzahl von straßenseitigen Einrichtungen durch Übertragung von Fahrzeugkommunikationsnachrichten zwischen der Fahrzeugtelekommunikationseinrichtung oder dem Fahrzeug und den straßenseitigen Einrichtungen, wobei die straßenseitige Einrichtung geeignet ist, in einem System gemäß einer Ausführungsform der vorliegenden Erfindung oder gemäß eines Verfahrens gemäß einer Ausführungsform der vorliegenden Erfindung verwendet zu werden.

Ferner wird die Ausgabe gelöst durch eine Fahrzeugtelekommunikationseinrichtung für ein Fahrzeug zur Kommunikation zwischen der Fahrzeugtelekommunikationseinrichtung und einer Mehrzahl von straßenseitigen Einrichtungen durch Übertragung von Fahrzeugkommunikationsnachrichten zwischen der Fahrzeugtelekommunikationseinrichtung und den straßenseitigen Einrichtungen, wobei das Fahrzeug und/oder die Fahrzeugkommunikationseinrichtung des Fahrzeugs geeignet ist, in einem System gemäß einer Ausführungsform der vorliegenden Erfindung oder gemäß eines Verfahrens gemäß einer Ausführungsform der vorliegenden Erfindung verwendet zu werden.

Des Weiteren wird die Ausgabe gelöst durch ein Computerprogramm mit Programmcodemitteln, mit deren Hilfe die Schritte eines Verfahrens gemäß einer Ausführungsform der Erfindung durchführbar sind, wenn das Computerprogramm auf einer programmierbaren Einrichtung, insbesondere als Teil des Systems, oder auf dem Fahrzeug oder der Fahrzeugkommunikationseinrichtung oder der oder den straßenseitigen Einrichtungen ausgeführt wird oder wenn das Computerprogramm teilweise auf dem Fahrzeug oder der Fahrzeugkommunikationseinrichtung und teilweise auf der oder den straßenseitigen Einrichtungen ausgeführt wird.

Des Weiteren wird die Ausgabe gelöst durch ein Computerprogrammprodukt mit einem computerlesbaren Medium und einem auf dem computerlesbaren Medium gespeicherten Computerprogramm mit Programmcodemitteln zur Kommunikation zwischen einer Fahrzeugtelekommunikationseinrichtung und einer Mehrzahl von straßenseitigen Einrichtungen durch Übertragung von Fahrzeugkommunikationsnachrichten zwischen der Fahrzeugtelekommunikationseinrichtung und den straßenseitigen Einrichtungen, die dazu geeignet sind, dass die Schritte eines Verfahrens gemäß einer Ausführungsform der vorliegenden Erfindung durchführbar sind, wenn das Computerprogramm auf einer programmierbaren Einrichtung, insbesondere als Teil des Systems, oder auf dem Fahrzeug oder der Fahrzeugkommunikationseinrichtung oder der oder den straßenseitigen Einrichtungen ausgeführt wird oder wenn das Computerprogramm teilweise auf dem Fahrzeug oder der Fahrzeugkommunikationseinrichtung und teilweise auf der oder den straßenseitigen Einrichtungen ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur** 1: illustriert den erfindungsgemäßen Nachrichtenaustausch zwischen einem Fahrzeug und einer ersten und zweiten straßenseitigen Einrichtung.
- **Figur** 2: zeigt schematisch eine beispielhafte Ausführungsform der vorliegenden Erfindung mit einer ersten, zweiten und dritten straßenseitigen Einrichtung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

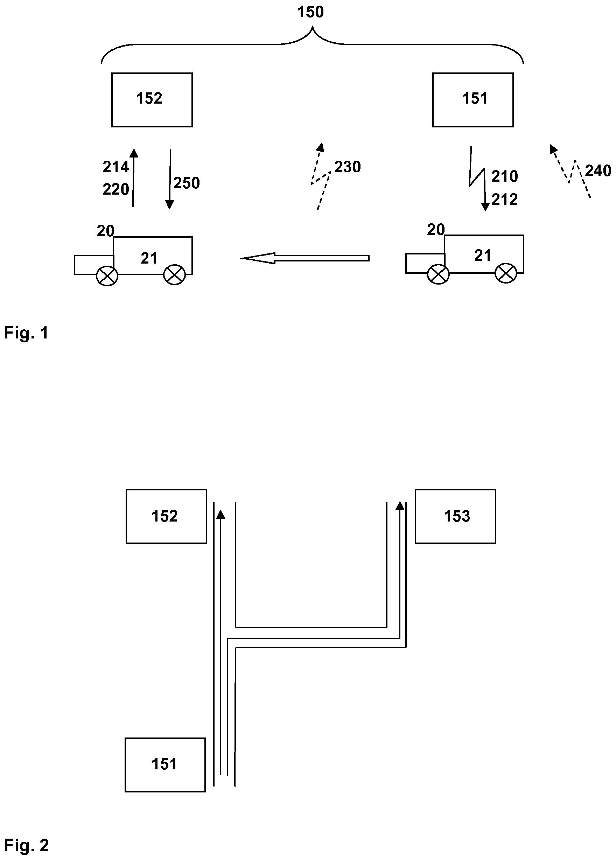

In Figur 1 ist eine schematische Ansicht des erfindungsgemäßen Nachrichtenaustauschs zwischen einem Fahrzeug 21 und einer ersten und zweiten straßenseitigen Einrichtung 151, 152 gezeigt. Dargestellt sind eine erste straßenseitige Einrichtung 151 aus einer Mehrzahl von straßenseitigen Einrichtungen 150 und eine zweite straßenseitige Einrichtung 152 aus einer Mehrzahl von straßenseitigen Einrichtungen 150 sowie ein Fahrzeug 21, das eine Fahrzeugtelekommunikationseinrichtung 20 aufweist. Das Fahrzeug 21 bewegt sich dabei mindestens aus einem Bereich in der Nähe der ersten straßenseitigen Einrichtung 151 (beispielsweise aus einem Bereich innerhalb eines vorher definierten Umkreises um die erste straßenseitige Einrichtung 151) in einen Bereich in der Nähe der zweiten straßenseitigen Einrichtung 152 (beispielsweise aus einem Bereich innerhalb eines vorher definierten Umkreises um die zweite straßenseitige Einrichtung 152). Diese Bewegung des Fahrzeugs 21 während der Ausführungsform des erfindungsgemäßen Verfahrens ist in Figur 1 schematisch durch einen breiten, nicht ausgefüllten Pfeil (im unteren mittleren Bereich der Abbildung) dargestellt, d.h., dass sich das Fahrzeug 21 und die Fahrzeugtelekommunikationseinrichtung 20 in Figur 1 während der Ausführungsform des erfindungsgemäßen Verfahrens von rechts nach links bewegen. In einem vierten Schritt wird eine vierte Fahrzeugkommunikationsnachricht 240 von der Fahrzeugtelekommunikationseinrichtung 20 oder dem Fahrzeug 21 zu der ersten straßenseitigen Einrichtung 151 übertragen. Die vierte Fahrzeugkommunikationsnachricht 240 beinhaltet eine bezüglich der Fahrzeugklasse des Fahrzeugs 21 eindeutige Identifikationsinformation. In einem ersten Schritt, der dem vierten Schritt nachfolgt, wird eine erste Fahrzeugkommunikationsnachricht 210 von der ersten straßenseitigen Einrichtung 151 zu der Fahrzeugtelekommunikationseinrichtung 20 oder zu dem Fahrzeug 21 übertragen. Diese erste Fahrzeugkommunikationsnachricht 210 umfasst eine erste Tokeninformation 212. Eine solche erste Tokeninformation 212 wird dafür vor der Übermittlung der ersten Fahrzeugkommunikationsnachricht 210 von der straßenseitigen Einrichtung 151 (oder einer ihr zugeordneten anderen Entität) in Abhängigkeit von der vorher erhaltenen optionale vierte Fahrzeugkommunikationsnachricht 240 generiert. In einem optionalen dritten Schritt wird eine optionale dritte Fahrzeugkommunikationsnachricht 230 von der Fahrzeugtelekommunikationseinrichtung 20 oder dem Fahrzeug 21 zu der ersten straßenseitigen Einrichtung 151 oder zu der zweiten straßenseitigen Einrichtung 152 übertragen. Mittels der optionalen dritten Fahrzeugkommunikationsnachricht 230 wird der Empfang der ersten Tokeninformation 212 (durch die Fahrzeugtelekommunikationseinrichtung 20 oder das Fahrzeug 21) bestätigt. Eine solche dritte Fahrzeugkommunikationsnachricht 230 kann an die erste und/oder zweite straßenseitige Einrichtung 151, 152 übermittelt werden, insbesondere dann, wenn die erste und zweite straßenseitige Einrichtung 151, 152 miteinander vernetzt sind und/oder eine Kommunikationsmöglichkeit zwischen der ersten und zweiten straßenseitigen Einrichtung 151, 152 und einer weiteren Entität beispielsweise einem Betreiber der ersten und zweiten straßenseitigen Einrichtung 151, 152 besteht. Während des/nach dem Erhalt der ersten Fahrzeugkommunikationsnachricht 210 und/oder während des/nach dem Versenden der dritten Fahrzeugkommunikationsnachricht 230 durch das Fahrzeug 21 bzw. die Fahrzeugtelekommunikationseinrichtung 20 bewegt sich das Fahrzeug 21 weiter entlang einer Straße und entfernt sich von der ersten straßenseitigen Einrichtung 151. In einem optionalen fünften Schritt, der vor, während und/oder nach dem optionalen dritten Schritt stattfindet (also insbesondere zeitlich später als der erste Schritt) wird eine optionale fünfte Fahrzeugkommunikationsnachricht 250 von der zweiten straßenseitigen Einrichtung 152 zu der Fahrzeugtelekommunikationseinrichtung 20 oder dem Fahrzeug 21 übertragen. Durch die fünfte Fahrzeugkommunikationsnachricht 250 wird die Übertragung der zweiten Fahrzeugkommunikationsnachricht 220 in einem zweiten Schritt von der Fahrzeugtelekommunikationseinrichtung 20 oder dem Fahrzeug 21 zu der zweiten straßenseitigen Einrichtung 152 veranlasst oder angefordert. In einem zweiten Schritt, der zeitlich nach dem ersten Schritt stattfindet und insbesondere zeitlich nach dem optionalen fünften Schritt stattfindet, wird eine zweite Fahrzeugkommunikationsnachricht 220 von der Fahrzeugtelekommunikationseinrichtung 20 oder dem Fahrzeug 21 zu der zweiten straßenseitigen Einrichtung 152 übertragen. Dabei umfasst die zweite Fahrzeugkommunikationsnachricht 220 entweder die erste Tokeninformation 212 und/oder die zweite Fahrzeugkommunikationsnachricht 220 umfasst eine durch die Fahrzeugtelekommunikationseinrichtung 20 oder in dem Fahrzeug 21 aufgrund der zuvor empfangenen ersten Tokeninformation 212 generierte oder modifizierte zweite Tokeninformation 214. Optional wird im zweiten Schritt als Teil der zweiten Fahrzeugkommunikationsnachricht 220 zusätzlich zu der ersten Tokeninformation 212 oder zusätzlich zu oder als Teil der zweiten Tokeninformation 214 wenigstens eine weitere Information von der Fahrzeugtelekommunikationseinrichtung 20 oder dem Fahrzeug 21 zu der zweiten straßenseitigen Einrichtung 152 übertragen. Die weitere Information umfasst wenigstens eine sich auf das Fahrzeug 21 beziehende geographische Koordinateninformation, eine sich auf das Fahrzeug 21 und eine Zeitinformation beziehende geographische Koordinateninformation, eine sich auf das Fahrzeug 21 beziehende geographische Koordinateninformation und ferner eine sich auf die geographische Koordinateninformation beziehende Zeitinformation, eine sich auf das Fahrzeug 21 und den Empfangs- oder Verarbeitungszeitpunkt der ersten Fahrzeugkommunikationsnachricht 210 beziehende geographische Koordinateninformation und insbesondere ferner eine Zeitinformation des Empfangs- oder Verarbeitungszeitpunkts der ersten Fahrzeugkommunikationsnachricht 210, eine sich auf das Fahrzeug 21 und den Verarbeitungs- oder Sendezeitpunkt der zweiten Fahrzeugkommunikationsnachricht 220 beziehende geographische Koordinateninformation und insbesondere ferner eine Zeitinformation des Verarbeitungs- oder Sendezeitpunkts der zweiten Fahrzeugkommunikationsnachricht 220. Dadurch kann beispielsweise die Benutzung der Route/Strecke/Straße zwischen der ersten straßenseitigen Einrichtung 151 und der zweiten straßenseitigen Einrichtung 152 durch ein Fahrzeug 21 nachvollzogen/ermittelt/bestimmt werden. Insbesondere wird nach der Übermittlung der zweiten Fahrzeugkommunikationsnachricht 220 die durchschnittliche Geschwindigkeit des Fahrzeug 21 auf der Route (Strecke) zwischen der ersten straßenseitigen Einrichtung 151 und einer zweiten straßenseitigen Einrichtung 152 ermittelt (anhand der mittels der zweiten Fahrzeugnachricht übermittelten sich auf das Fahrzeug 21 und eine Zeitinformation beziehenden geographischen Koordinateninformation), vorzugsweise durch die zweite straßenseitige Einrichtung 152 oder durch eine Entität, die Zugriff auf die Daten der zweiten straßenseitigen Einrichtung 152 hat, insbesondere auf die zweite Tokeninformation 214 und/oder die weitere Information.

In Figur 2 ist schematisch eine beispielhafte Ausführungsform der vorliegenden Erfindung gezeigt. Dabei sind eine erste straßenseitige Einrichtung 151, eine zweite straßenseitige Einrichtung 152 und eine dritte straßenseitige Einrichtung 153 dargestellt. Die erste, zweite und dritte straßenseitige Einrichtung 151, 152, 153 befinden sich dabei in der Nähe eines Straßensystems, das eine Weggabelung aufweist. Die beiden Pfeile deuten mögliche Wege für Fahrzeuge 21 an. Durch Benutzung einer ersten Route (entsprechend dem linken Pfeil in Figur 2), kann ein erstes Fahrzeug 21 somit von einem Bereich auf der Straße in der Nähe der ersten straßenseitigen Einrichtung 151 in einen Bereich in der Nähe der zweiten straßenseitigen Einrichtung 152 gelangen. Durch Benutzung einer zweiten Route (entsprechend dem rechten Pfeil in Figur 2), kann ein zweites Fahrzeug 21 somit von einem Bereich auf der Straße in der Nähe der ersten straßenseitigen Einrichtung 151 in einen Bereich in der Nähe der dritten straßenseitigen Einrichtung 153 gelangen. Gemäß einer Ausführungsform der vorliegenden Erfindung, insbesondere nach dem Erhalt der zweiten Fahrzeugkommunikationsnachricht 220 durch die zweite straßenseitige Einrichtung 152 (siehe auch die Figur 1), kann die Benutzung der ersten Route des ersten Fahrzeugs 21 (zwischen der ersten und der zweiten straßenseitigen Einrichtung 151, 152) festgestellt werden, beispielsweise durch eine Entität, die Zugriff auf die Daten der zweiten straßenseitigen Einrichtung 152 hat. Gemäß einer Ausführungsform der vorliegenden Erfindung, insbesondere nach dem Erhalt der zweiten Fahrzeugkommunikationsnachricht 220 durch die dritte straßenseitige Einrichtung 153 (siehe auch die in Figur 1, wobei in allen möglichen Schritten die zweite straßenseitige Einrichtung 152 durch die dritte straßenseitige Einrichtung 153 ersetzt wird) kann die Benutzung der zweiten Route des zweiten Fahrzeugs 21 (zwischen der ersten und der dritten straßenseitigen Einrichtung 151, 153) festgestellt werden, beispielsweise durch eine Entität, die Zugriff auf die Daten der dritten straßenseitigen Einrichtung 153 hat. Dieses Verfahren kann für eine beliebige Anzahl von Fahrzeugen 21 wiederholt werden, sodass ermittelt werden kann welche Anzahl an Fahrzeugen 21 (und welche Typen von Fahrzeugen 21 und in welcher Anzahl) beispielsweise innerhalb eines vorher definierten Zeitraums die erste oder zweite Route benutzen.

## Patentansprüche

1. Verfahren zur Kommunikation zwischen einerseits einer Fahrzeugtelekommunikationseinrichtung, vehicle mounted communication equipment, (20) eines ersten Fahrzeugs (21) und andererseits einer Mehrzahl von straßenseitigen Einrichtungen, roadside units, (150) durch Übertragung von Fahrzeugkommunikationsnachrichten, vehicle communication messages, (200) zwischen der Fahrzeugtelekommunikationseinrichtung (20) des ersten Fahrzeugs (21) und den straßenseitigen Einrichtungen (150), wobei die Mehrzahl von straßenseitigen Einrichtungen (150) wenigstens eine erste straßenseitige Einrichtung (151), eine zweite straßenseitige Einrichtung (152) und eine dritte straßenseitige Einrichtung (153) aufweist, wobei zwischen der ersten und zweiten straßenseitigen Einrichtung (151, 152) eine Straßengabelung oder Kreuzung angeordnet ist, an der die Straße in eine erste und eine zweite Route verzweigt, wobei die zweite straßenseitige Einrichtung (152) an der ersten Route angeordnet ist und die dritte straßenseitige Einrichtung (153) an der zweiten Route angeordnet ist, wobei das Verfahren die folgenden Schritte aufweist:
-- in einem ersten Schritt wird eine erste Fahrzeugkommunikationsnachricht (210) von der ersten straßenseitigen Einrichtung (151) zu der Fahrzeugtelekommunikationseinrichtung (20) des ersten Fahrzeugs (21) übertragen, wobei die erste Fahrzeugkommunikationsnachricht (210) eine erste Tokeninformation, token information, (212) umfasst,
-- in einem dem ersten Schritt nachfolgenden zweiten Schritt wird eine zweite Fahrzeugkommunikationsnachricht (220) von der Fahrzeugtelekommunikationseinrichtung (20) des ersten Fahrzeugs (21) zu der zweiten straßenseitigen Einrichtung (152) übertragen, wobei die zweite Fahrzeugkommunikationsnachricht (220) entweder die erste Tokeninformation (212) umfasst oder wobei die zweite Fahrzeugkommunikationsnachricht (220) eine durch die Fahrzeugtelekommunikationseinrichtung (20) des ersten Fahrzeugs (21) aufgrund der zuvor empfangenen ersten Tokeninformation (212) generierte oder modifizierte zweite Tokeninformation (214) umfasst,
-- in einem dem ersten Schritt vorangehenden vierten Schritt wird eine vierte Fahrzeugkommunikationsnachricht (240) von der Fahrzeugtelekommunikationseinrichtung (20) oder dem Fahrzeug (21) zu der ersten straßenseitigen Einrichtung (151) übertragen, wobei mittels der vierten Fahrzeugkommunikationsnachricht (240) eine bezüglich der Fahrzeugklasse des Fahrzeugs (21) eindeutige Identifikationsinformation zu der ersten straßenseitigen Einrichtung (151) übertragen wird, wobei die erste Tokeninformation (212) in Abhängigkeit von der eindeutigen Identifikationsinformation generiert wird, wobei der erste, zweite und vierte Schritt in analoger Weise mit einer Fahrzeugtelekommunikationseinrichtung (20) eines zweiten Fahrzeugs (21) durchgeführt werden, wobei eine erste Fahrzeugkommunikationsnachricht (210) mit einer ersten Tokeninformation (212) von der ersten straßenseitigen Einrichtung (151) zu der Fahrzeugtelekommunikationseinrichtung (20) des zweiten Fahrzeugs übertragen wird und eine zweite Fahrzeugkommunikationsnachricht (220) von der Fahrzeugtelekommunikationseinrichtung (20) des zweiten Fahrzeugs (21) zu der dritten straßenseitigen Einrichtung (152) übertragen wird, wobei der Erhalt der zweiten Fahrzeugkommunikationsnachricht (220) durch die zweite straßenseitige Einrichtung (152) dazu verwendet wird, die Benutzung der ersten Route durch das erste Fahrzeug (21) festzustellen und der Erhalt der zweiten Fahrzeugkommunikationsnachricht (220) durch die dritte straßenseitige Einrichtung (153) dazu verwendet wird, die Benutzung der zweiten Route durch das zweite Fahrzeug (21) festzustellen, wobei durch Wiederholung der Schritte ermittelt wird, welche Typen von Fahrzeugen (21) und in welcher Anzahl innerhalb eines vorher definierten Zeitraums die erste und zweite Route benutzen.

2. Verfahren nach Anspruch 1, wobei im zweiten Schritt als Teil der zweiten Fahrzeugkommunikationsnachricht (220)
-- zusätzlich zu der ersten Tokeninformation (212) oder
-- zusätzlich zu oder als Teil der zweiten Tokeninformation (214)
wenigstens eine weitere Information von der Fahrzeugtelekommunikationseinrichtung (20) des ersten Fahrzeugs (21) zu der zweiten straßenseitigen Einrichtung (152) übertragen wird, wobei die weitere Information wenigstens eine der nachfolgenden Informationen umfasst:
-- eine sich auf den Ort des Fahrzeugs (21) beziehende geographische Koordinateninformation, geographic coordinate information,
-- eine sich auf den Ort des Fahrzeugs (21) und eine Zeitinformation beziehende geographische Koordinateninformation,
-- eine sich auf den Ort des Fahrzeugs (21) beziehende geographische Koordinateninformation und ferner eine sich auf die geographische Koordinateninformation beziehende Zeitinformation,
-- eine sich auf den Ort des Fahrzeugs (21) und den Empfangs- oder Verarbeitungszeitpunkt der ersten Fahrzeugkommunikationsnachricht (210) beziehende geographische Koordinateninformation und insbesondere ferner eine Zeitinformation des Empfangs- oder Verarbeitungszeitpunkts der ersten Fahrzeugkommunikationsnachricht (210),
-- eine sich auf den Ort des Fahrzeugs (21) und den Verarbeitungs- oder Sendezeitpunkt der zweiten Fahrzeugkommunikationsnachricht (220) beziehende geographische Koordinateninformation und insbesondere ferner eine Zeitinformation des Verarbeitungs- oder Sendezeitpunkts der zweiten Fahrzeugkommunikationsnachricht (220),
wobei insbesondere der erste und/oder der zweite Schritt in Abhängigkeit einer von der Fahrzeugtelekommunikationseinrichtung (20) des ersten Fahrzeugs (21) übertragenen Bewegungsrichtungsinformation, heading information, und/oder in Abhängigkeit einer von der Fahrzeugtelekommunikationseinrichtung (20) des ersten Fahrzeugs (21) übertragenen oder von der ersten straßenseitigen Einrichtung (151) detektierten Geschwindigkeitsinformation, velocity information, erfolgt oder durchgeführt wird.

3. Verfahren nach einem der vorhergehenden Ansprüchen, wobei die erste Tokeninformation (212), die als Teil der im ersten Schritt von der ersten straßenseitigen Einrichtung (151) zu der Fahrzeugtelekommunikationseinrichtung (20) des ersten Fahrzeugs (21) übertragenen ersten Fahrzeugkommunikationsnachricht (210) übertragen wird, lediglich eine Anforderung, request, zur Generierung der zweiten Tokeninformation (214) aufweist oder ist.

4. Verfahren nach einem der vorhergehenden Ansprüche, wobei in einem dem ersten Schritt nachfolgenden und dem zweiten Schritt vorangehenden fünften Schritt eine fünfte Fahrzeugkommunikationsnachricht (250) von der zweiten straßenseitigen Einrichtung (152) zu der Fahrzeugtelekommunikationseinrichtung (20) des ersten Fahrzeugs (21) übertragen wird, wobei mittels der fünften Fahrzeugkommunikationsnachricht (250) die Übertragung der zweiten Fahrzeugkommunikationsnachricht (220) von der Fahrzeugtelekommunikationseinrichtung (20) des ersten Fahrzeugs (21) zu der zweiten straßenseitigen Einrichtung (152) veranlasst oder angefordert wird.

5. Verfahren nach einem der vorhergehenden Ansprüche, wobei die zweite Tokeninformation (214) und/oder die wenigstens eine weitere Information dazu verwendet wird/werden die durchschnittliche Geschwindigkeit des Fahrzeugs (21) zwischen der sich auf den Ort des Fahrzeugs (21) und den Empfangs- oder Verarbeitungszeitpunkt der ersten Fahrzeugkommunikationsnachricht (210) beziehenden geographischen Koordinateninformation und der sich auf den Ort des Fahrzeugs (21) und den Verarbeitungs- oder Sendezeitpunkt der zweiten Fahrzeugkommunikationsnachricht (220) beziehenden geographischen Koordinateninformation zu erfassen.

6. Verfahren nach einem der vorhergehenden Ansprüche, wobei die Fahrzeugkommunikationsnachrichten (210, 220, 230, 240, 250) als Kollisionsvermeidungsnachrichten, collision avoidance messages, - insbesondere gemäß der PC5-Schnittstellendefinition - innerhalb eines Kommunikationssystems gemäß des LTE-V-Standards (Long Term Evolution Vehicle Communication) und/oder einer vergleichbaren Nachricht des IEEE 802.11p-Standards vorgesehen sind.

7. System zur Kommunikation zwischen einerseits einer Fahrzeugtelekommunikationseinrichtung (20) eines Fahrzeug (21) und andererseits einer Mehrzahl von straßenseitigen Einrichtungen (150) durch Übertragung von Fahrzeugkommunikationsnachrichten (200) zwischen der Fahrzeugtelekommunikationseinrichtung (20) des Fahrzeugs (21) und den straßenseitigen Einrichtungen (150), wobei die Mehrzahl von straßenseitigen Einrichtungen (150) wenigstens eine erste straßenseitige Einrichtung (151), eine zweite straßenseitige Einrichtung (152) und eine dritte straßenseitige Einrichtung (153) aufweist und wobei das System wenigstens das erste und zweite Fahrzeug (21) und die Mehrzahl von straßenseitigen Einrichtungen (150) aufweist, wobei das System dazu konfiguriert ist, ein Verfahren nach einem der Ansprüche 1 bis 6 durchzuführen.

8. Straßenseitige Einrichtung (151, 152, 153), roadside unit, zur Kommunikation zwischen einerseits einer Fahrzeugtelekommunikationseinrichtung (20) eines Fahrzeugs (21) und andererseits einer Mehrzahl von straßenseitigen Einrichtungen (150) durch Übertragung von Fahrzeugkommunikationsnachrichten (200) zwischen der Fahrzeugtelekommunikationseinrichtung (20) des Fahrzeugs (21) und den straßenseitigen Einrichtungen (150), wobei die straßenseitige Einrichtung (151, 152, 153) dazu konfiguriert ist, diejenigen Verfahrensschritte, welche gemäß eines Verfahrens nach einem der Ansprüche 1 bis 6 durch eine straßenseitige Einrichtung (151, 152, 153) ausgeführt werden, auszuführen.

9. Fahrzeugtelekommunikationseinrichtung (20), vehicle communication device, für ein Fahrzeug (21) zur Kommunikation zwischen der Fahrzeugtelekommunikationseinrichtung (20) und einer Mehrzahl von straßenseitigen Einrichtungen (150) durch Übertragung von Fahrzeugkommunikationsnachrichten (200) zwischen der Fahrzeugtelekommunikationseinrichtung (20) und den straßenseitigen Einrichtungen (150), wobei die Fahrzeugkommunikationseinrichtung (20) dazu konfiguriert ist, diejenigen Verfahrensschritte, welche gemäß eines Verfahrens nach einem der Ansprüche 1 bis 6 durch eine Fahrzeugtelekommunikationseinrichtung (20) ausgeführt werden, auszuführen.

10. Computerprogramm mit Programmcodemitteln, mit deren Hilfe die Schritte eines Verfahrens nach einem der Ansprüche 1 bis 6 durchführbar sind, wenn das Computerprogramm auf einer programmierbaren Einrichtung, insbesondere als Teil des Systems, oder auf dem Fahrzeug (21) oder der Fahrzeugkommunikationseinrichtung (20) oder der oder den straßenseitigen Einrichtungen (150) ausgeführt wird.

11. Computerprogrammprodukt mit einem computerlesbaren Medium und einem auf dem computerlesbaren Medium gespeicherten Computerprogramm gemäß Anspruch 10.

## Claims

1. Method for communication between a vehicle communication device (20) of a first vehicle (21) and a plurality of roadside units (150) by transmitting vehicle communication messages (200) between the vehicle communication device (20) of the first vehicle (21) and the roadside units (150), the plurality of roadside units (150) comprising at least a first roadside unit (151), a second roadside unit (152) and a third roadside unit (153), a fork or crossroads at which the road branches into a first and a second route being arranged between the first and second roadside units (151, 152), the second roadside unit (152) being arranged on the first route and the third roadside unit (153) being arranged on the second route, the method comprising the following steps:
- in a first step, a first vehicle communication message (210) is transmitted from the first roadside unit (151) to the vehicle communication device (20) of the first vehicle (21), the first vehicle communication message (210) comprising first token information (212),
- in a second step following the first step, a second vehicle communication message (220) is transmitted from the vehicle communication device (20) of the first vehicle (21) to the second roadside unit (152), either the second vehicle communication message (220) comprising the first token information (212) or the second vehicle communication message (220) comprising second token information (214) generated or modified by the vehicle communication device (20) of the first vehicle (21) on the basis of the previously received first token information (212),
- in a fourth step preceding the first step, a fourth vehicle communication message (240) is transmitted from the vehicle communication device (20) or the vehicle (21) to the first roadside unit (151), identification information unique to the vehicle class of the vehicle (21) being transmitted to the first roadside unit (151) by means of the fourth vehicle communication message (240), the first token information (212) being generated as a function of the unique identification information, the first, second and fourth steps being performed analogously using a vehicle communication device (20) of a second vehicle (21), a first vehicle communication message (210) comprising first token information (212) being transmitted from the first roadside unit (151) to the vehicle communication device (20) of the second vehicle and a second vehicle communication message (220) being transmitted from the vehicle communication device (20) of the second vehicle (21) to the third roadside unit (152), receipt of the second vehicle communication message (220) by the second roadside unit (152) being used to establish use of the first route by the first vehicle (21) and receipt of the second vehicle communication message (220) by the third roadside unit (153) being used to establish use of the second route by the second vehicle (21), it being determined what types of vehicles (21) are using the first and the second route within a predefined timeframe, and in what numbers, by repeating the steps.

2. Method according to claim 1, wherein, in the second step, as part of the second vehicle communication message (220),
- in addition to the first token information (212) or
- in addition to or as part of the second token information (214),
at least one further piece of information is transmitted from the vehicle communication device (20) of the first vehicle (21) to the second roadside unit (152), the further information comprising at least one of the following pieces of information:
- geographic coordinate information relating to the location of the vehicle (21),
- geographic coordinate information relating to the location of the vehicle (21) and to time information,
- geographic coordinate information relating to the location of the vehicle (21), along with time information relating to the geographic coordinate information,
- geographic coordinate information relating to the location of the vehicle (21) and to the time of receipt or processing of the first vehicle communication message (210), in particular along with time information of the time of receipt or processing of the first vehicle communication message (210),
- geographic coordinate information relating to the location of the vehicle (21) and to the time of processing or transmission of the second vehicle communication message (220), in particular along with time information of the time of processing or transmission of the second vehicle communication message (220),
in particular the first and/or second step taking place or being carried out as a function of heading information transmitted by the vehicle communication device (20) of the first vehicle (21) and/or as a function of velocity information transmitted by the vehicle communication device (20) of the first vehicle (21) or detected by the first roadside unit (151).

3. Method according to any of the preceding claims, wherein the first token information (212), which is transmitted as part of the first vehicle communication message (210) transmitted from the first roadside unit (151) to the vehicle communication device (20) of the first vehicle (21) in the first step, merely comprises or is a request to generate the second token information (214).

4. Method according to any of the preceding claims, wherein, in a fifth step following the first step and preceding the second step, a fifth vehicle communication message (250) is transmitted from the second roadside unit (152) to the vehicle communication device (20) of the first vehicle (21), the transmission of the second vehicle communication message (220) from the vehicle communication device (20) of the first vehicle (21) to the second roadside unit (152) being initiated or requested by means of the fifth vehicle communication message (250).

5. Method according to any of the preceding claims, wherein the second token information (214) and/or the at least one further piece of information are used to determine the average speed of the vehicle (21) between the geographic coordinate information relating to the location of the vehicle (21) and to the time of receipt or processing of the first vehicle communication message (210) and the geographic coordinate information relating to the location of the vehicle (21) and to the time of processing or transmission of the second vehicle communication message (220) .

6. Method according to any of the preceding claims, wherein the vehicle communication messages (210, 220, 230, 240, 250) are provided as collision avoidance messages, in particular in accordance with the PC5 interface definition, within a communication system in accordance with the LTE-V (long-term evolution vehicle communication) standard and/or a comparable message of the IEEE 802.11p standard.

7. System for communication between a vehicle communication device (20) of a vehicle (21) and a plurality of roadside units (150) by transmitting vehicle communication messages (200) between the vehicle communication device (20) of the vehicle (21) and the roadside units (150), the plurality of roadside units (150) comprising at least a first roadside unit (151), a second roadside unit (152) and a third roadside unit (153), and the system comprising at least the first and the second vehicle (21) and the plurality of roadside units (150), the system being configured to carry out a method according to any of claims 1 to 6.

8. Roadside unit (151, 152, 153) for communication between a vehicle communication device (20) of a vehicle (21) and a plurality of roadside units (150) by transmitting vehicle communication messages (200) between the vehicle communication device (20) of the vehicle (21) and the roadside units (150), the roadside unit (151, 152, 153) being configured to carry out those method steps which are carried out by a roadside unit (151, 152, 153) in a method according to any of claims 1 to 6.

9. Vehicle communication device (20) for a vehicle (21) for communication between the vehicle communication device (20) and a plurality of roadside units (150) by transmitting vehicle communication messages (200) between the vehicle communication device (20) and the roadside units (150), the vehicle communication device (20) being configured to carry out those method steps which are carried out by a vehicle communication device (20) in a method according to any of claims 1 to 6.

10. Computer program, comprising program code means by way of which the steps of a method according to any of claims 1 to 6 can be carried out when the computer program is executed on a programmable device, in particular as part of a system, or on the vehicle (21) or the vehicle communication device (20) or the roadside unit or units (150) .

11. Computer program product, comprising a computer-readable medium and a computer program according to claim 10 stored on the computer-readable medium.

## Revendications

1. Procédé de communication entre, d'une part, un équipement de télécommunication de véhicule (vehicle mounted communication equipment) (20) d'un premier véhicule (21) et, d'autre part, une pluralité d'unités de bord de route (roadside units) (150) par transmission de messages de communication de véhicule (vehicle communication messages) (200) entre l'équipement de télécommunication de véhicule (20) du premier véhicule (21) et les unités de bord de route (150), dans lequel la pluralité d'unités de bord de route (150) présente au moins une première unité de bord de route (151), une deuxième unité de bord de route (152) et une troisième unité de bord de route (153), dans lequel, entre les première et deuxième unités de bord de route (151, 152), est disposé un embranchement ou un croisement où la route se divise en un premier et un deuxième itinéraire, la deuxième unité de bord de route (152) étant disposée sur le premier itinéraire et la troisième unité de bord de route (153) étant disposée sur le deuxième itinéraire, le procédé présentant les étapes suivantes :
- dans une première étape, un premier message de communication de véhicule (210) est transmis par la première unité de bord de route (151) à l'équipement de télécommunication de véhicule (20) du premier véhicule (21), le premier message de communication de véhicule (210) comprenant une première information de jeton (token information) (212),
- dans une deuxième étape suivant la première étape, un deuxième message de communication de véhicule (220) est transmis par l'équipement de télécommunication de véhicule (20) du premier véhicule (21) à la deuxième unité de bord de route (152), soit le deuxième message de communication de véhicule (220) comprenant la première information de jeton (212), soit le deuxième message de communication de véhicule (220) comprenant une deuxième information de jeton (214) générée ou modifiée par l'équipement de télécommunication de véhicule (20) du premier véhicule (21) sur la base de la première information de jeton (212) reçue précédemment,
- dans une quatrième étape précédant la première étape, un quatrième message de communication de véhicule (240) est transmis par l'équipement de télécommunication de véhicule (20) ou le véhicule (21) à la première unité de bord de route (151), une information d'identification unique concernant la catégorie de véhicule du véhicule (21) étant transmise à la première unité de bord de route (151) au moyen du quatrième message de communication de véhicule (240), la première information de jeton (212) étant générée en fonction de l'information d'identification unique, les première, deuxième et quatrième étapes étant exécutées de manière analogue avec un équipement de télécommunication de véhicule (20) d'un deuxième véhicule (21), un premier message de communication de véhicule (210) avec une première information de jeton (212) étant transmis par la première unité de bord de route (151) à l'équipement de télécommunication de véhicule (20) du deuxième véhicule et un deuxième message de communication de véhicule (220) étant transmis par l'équipement de télécommunication de véhicule (20) du deuxième véhicule (21) à la troisième unité de bord de route (152), la réception du deuxième message de communication de véhicule (220) par la deuxième unité de bord de route (152) étant utilisée pour déterminer que le premier véhicule (21) emprunte le premier itinéraire et la réception du deuxième message de communication de véhicule (220) par la troisième unité de bord de route (153) étant utilisée pour déterminer que le deuxième véhicule (21) emprunte le deuxième itinéraire, dans lequel, en répétant les étapes, on détermine quels types de véhicules (21) et en quel nombre empruntent les premier et deuxième itinéraires dans une période de temps préalablement définie.

2. Procédé selon la revendication 1, dans lequel, dans la deuxième étape, en tant que partie du deuxième message de communication de véhicule (220)
- en plus de la première information de jeton (212) ou
- en plus de ou en tant que partie de la deuxième information de jeton (214), au moins une autre information est transmise par l'équipement de télécommunication de véhicule (20) du premier véhicule (21) à la deuxième unité de bord de route (152), l'autre information comprenant au moins l'une des informations suivantes :
- une information de coordonnées géographiques (geographic coordinate information) se rapportant à la localisation du véhicule (21),
- une information de coordonnées géographiques se rapportant à la localisation du véhicule (21) et à une information de temps,
- une information de coordonnées géographiques se rapportant à la localisation du véhicule (21) et en outre une information de temps se rapportant à l'information de coordonnées géographiques,
- une information de coordonnées géographiques se rapportant à la localisation du véhicule (21) et à l'instant de réception ou de traitement du premier message de communication de véhicule (210) et en particulier en outre une information de temps sur l'instant de réception ou de traitement du premier message de communication de véhicule (210),
- une information de coordonnées géographiques se rapportant à la localisation du véhicule (21) et à l'instant de traitement ou d'émission du deuxième message de communication de véhicule (220) et en particulier en outre une information de temps sur l'instant de traitement ou d'émission du deuxième message de communication de véhicule (220),
dans lequel, en particulier, la première et/ou la deuxième étape est effectuée ou exécutée en fonction d'une information de direction de déplacement (heading information) transmise par l'équipement de télécommunication de véhicule (20) du premier véhicule (21) et/ou en fonction d'une information de vitesse (velocity information) transmise par l'équipement de télécommunication de véhicule (20) du premier véhicule (21) ou détectée par la première unité de bord de route (151).

3. Procédé selon l'une des revendications précédentes, dans lequel la première information de jeton (212) qui est transmise en tant que partie du premier message de communication de véhicule (210) transmis dans la première étape par la première unité de bord de route (151) à l'équipement de télécommunication de véhicule (20) du premier véhicule (21) présente ou est uniquement une requête (request) pour générer la deuxième information de jeton (214).

4. Procédé selon l'une des revendications précédentes, dans lequel, dans une cinquième étape suivant la première étape et précédant la deuxième étape, un cinquième message de communication de véhicule (250) est transmis par la deuxième unité de bord de route (152) à l'équipement de télécommunication de véhicule (20) du premier véhicule (21), la transmission du deuxième message de communication de véhicule (220) par l'équipement de télécommunication de véhicule (20) du premier véhicule (21) à la deuxième unité de bord de route (152) étant initiée ou demandée au moyen du cinquième message de communication de véhicule (250).

5. Procédé selon l'une des revendications précédentes, dans lequel la deuxième information de jeton (214) et/ou ladite au moins une autre information est/sont utilisée(s) pour détecter la vitesse moyenne du véhicule (21) entre l'information de coordonnées géographiques se rapportant à la localisation du véhicule (21) et à l'instant de réception ou de traitement du premier message de communication de véhicule (210) et l'information de coordonnées géographiques se rapportant à la localisation du véhicule (21) et à l'instant de traitement ou d'émission du deuxième message de communication de véhicule (220).

6. Procédé selon l'une des revendications précédentes, dans lequel les messages de communication de véhicule (210, 220, 230, 240, 250) sont prévus comme des messages d'évitement de collision (collision avoidance messages) - en particulier selon la définition de l'interface PC5 - au sein d'un système de communication selon la norme LTE-V (Long Term Evolution Vehicle Communication) et/ou d'un message comparable de la norme IEEE 802.11p.

7. Système de communication entre, d'une part, un équipement de télécommunication de véhicule (20) d'un véhicule (21) et, d'autre part, une pluralité d'unités de bord de route (150) par transmission de messages de communication de véhicule (200) entre l'équipement de télécommunication de véhicule (20) du véhicule (21) et les unités de bord de route (150), dans lequel la pluralité d'unités de bord de route (150) présente au moins une première unité de bord de route (151), une deuxième unité de bord de route (152) et une troisième unité de bord de route (153), et dans lequel le système présente au moins les premier et deuxième véhicules (21) et la pluralité d'unités de bord de route (150), le système étant configuré pour mettre en œuvre un procédé selon l'une des revendications 1 à 6.

8. Unité de bord de route (151, 152, 153) (roadside unit) pour la communication entre, d'une part, un équipement de télécommunication de véhicule (20) d'un véhicule (21) et, d'autre part, une pluralité d'unités de bord de route (150) par transmission de messages de communication de véhicule (200) entre l'équipement de télécommunication de véhicule (20) du véhicule (21) et les unités de bord de route (150), l'unité de bord de route (151, 152, 153) étant configurée pour exécuter les étapes de procédé qui sont exécutées par une unité de bord de route (151, 152, 153) conformément à un procédé selon l'une des revendications 1 à 6.

9. Équipement de télécommunication de véhicule (20) (vehicle communication device) pour un véhicule (21), destiné à la communication entre l'équipement de télécommunication de véhicule (20) et une pluralité d'unités de bord de route (150) par transmission de messages de communication de véhicule (200) entre l'équipement de télécommunication de véhicule (20) et les unités de bord de route (150), l'équipement de télécommunication de véhicule (20) étant configuré pour exécuter les étapes de procédé qui sont exécutées par un équipement de télécommunication de véhicule (20) conformément à un procédé selon l'une des revendications 1 à 6.

10. Programme d'ordinateur comprenant des moyens de code de programme permettant d'exécuter les étapes d'un procédé selon l'une des revendications 1 à 6 lorsque le programme d'ordinateur est exécuté sur un équipement programmable, en particulier faisant partie du système, ou sur le véhicule (21) ou l'équipement de communication de véhicule (20) ou la ou les unités de bord de route (150).

11. Produit programme d'ordinateur comprenant un support lisible par ordinateur et un programme d'ordinateur selon la revendication 10 stocké sur le support lisible par ordinateur.
